(19) **Europäisches Patentamt / European Patent Office / Office européen des brevets**

(11) **EP 4 712 643 A1**

(12) **EUROPEAN PATENT APPLICATION**
published in accordance with Art. 153(4) EPC

(43) Date of publication:
**18.03.2026 Bulletin 2026/12**

(21) Application number: **24807407.2**

(22) Date of filing: **30.04.2024**

(51) International Patent Classification (IPC):
**H04W 72/1273** (2023.01)   **H04W 8/24** (2009.01)
**H04W 72/0446** (2023.01)   **H04W 72/53** (2023.01)
**H04L 5/00** (2006.01)   **H04L 27/26** (2006.01)
**H04W 88/02** (2009.01)   **H04W 72/30** (2023.01)
**H04L 65/612** (2022.01)

(52) Cooperative Patent Classification (CPC):
**H04L 5/00; H04L 27/26; H04L 65/612; H04W 8/24;**
**H04W 72/0446; H04W 72/1273; H04W 72/30;**
**H04W 72/53; H04W 88/02**

(86) International application number:
**PCT/KR2024/005881**

(87) International publication number:
**WO 2024/237530 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.05.2023 KR 20230062057**
**02.11.2023 KR 20230150161**

(71) Applicant: **LG Electronics Inc.**
**Yeongdeungpo-gu**
**Seoul 07336 (KR)**

(72) Inventors:
• **AHN, Seungjin**
  **Seoul 06772 (KR)**
• **LEE, Youngdae**
  **Seoul 06772 (KR)**
• **KIM, Jaehyung**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING DOWNLINK TRANSMISSION AND RECEPTION IN WIRELESS COMMUNICATION SYSTEM**

(57) A method and an apparatus for communicating in a wireless communication system are disclosed. A method performed by a terminal according to an embodiment of the present disclosure may comprise the steps of: transmitting, to a base station, first capability information indicating that reception of a ullicast downlink channel and a multicast downlink channel is supported in a single slot; receiving information for scheduling one or more unicast downlink channels and one or more multicast downlink channels on slot n (n is a natural number) from the base station; and decoding at least one downlink channel among the one or more unicast downlink channels or the one or more multicast downlink channels on the basis of a total sum of physical resource blocks (RBs) allocated to each of the one or more unicast downlink channels and the one or more multicast downlink channels exceeding a threshold value.

FIG.7

```
┌─────────────────────────────────┐
│ TRANSMITTING FIRST CAPABILITY   │
│ INFORMATION INDICATING SUPPORT  │
│ FOR RECEPTION OF A UNICAST      │
│ DOWNLINK CHANNEL AND A MULTICAST │── S710
│ DOWNLINK CHANNEL IN A SINGLE    │
│ SLOT TO THE BASE STATION        │
└─────────────────────────────────┘
                │
┌─────────────────────────────────┐
│ RECEIVING INFORMATION FROM THE  │
│ BASE STATION FOR SCHEDULING ONE │
│ OR MORE UNICAST DOWNLINK        │── S720
│ CHANNELS AND ONE OR MORE        │
│ MULTICAST DOWNLINK CHANNELS ON  │
│ SLOT N                          │
└─────────────────────────────────┘
                │
┌─────────────────────────────────┐
│ DECODING AT LEAST ONE DOWNLINK  │
│ CHANNEL AMONG THE ONE OR MORE   │
│ UNICAST DOWNLINK CHANNELS OR THE │── S730
│ ONE OR MORE MULTICAST DOWNLINK  │
│ CHANNELS                        │
└─────────────────────────────────┘
```

EP 4 712 643 A1

**Description**

[Technical Field]

The present disclosure relates to a wireless communication system, and more particularly, to a method and device for performing downlink transmission and reception in a narrowband in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing downlink transmission and reception in a wireless communication system.

The technical problem of the present disclosure is to provide a method and device for transmitting and receiving at least one unicast/multicast downlink in a narrowband.

The technical problem of the present disclosure is to provide a method and device for processing multiple unicast/multicast downlinks received simultaneously in a narrowband.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system may include transmitting, to a base station, first capability information indicating support for reception of a unicast downlink channel and a multicast downlink channel in a single slot; receiving, from the base station, information scheduling at least one unicast downlink channel and at least one multicast downlink channel on slot n (where n is a natural number); and based on a sum of physical resource blocks (RBs) allocated to each of the at least one unicast downlink channel and the at least one multicast downlink channel exceeding a threshold, decoding at least one downlink channel among the at least one unicast downlink channel or the at least one multicast downlink channel.

According to one embodiment of the present disclosure, a method performed by a base station in a wireless communication system may include receiving, from a user equipment (UE), first capability information indicating support for reception of a unicast downlink channel and a multicast downlink channel in a single slot; and transmitting, to the UE, information for scheduling at least one unicast downlink channel and at least one multicast downlink channel in slot n (where n is a natural number), and based on a sum of physical resource blocks (RBs) allocated to each of the at least one unicast downlink channel and the at least one multicast downlink channel exceeding a threshold, at least one downlink channel among the at least one unicast downlink channel or the at least one multicast downlink channel may be decoded by the UE.

[Technical Effects]

According to various embodiments of the present disclosure, a method and apparatus for performing downlink transmission and reception in a wireless communication system may be provided.

According to various embodiments of the present disclosure, a method and apparatus for transmitting and receiving at least one unicast/multicast downlink in a narrowband may be provided.

According to various embodiments of the present disclosure, a method and apparatus for processing multiple unicast/multicast downlinks simultaneously received in a narrowband may be provided.

According to various embodiments of the present disclosure, an enhanced reduced capability (eRedCap) UE may more efficiently process downlinks scheduled in a unit slot.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a process by which a UE performs communication according to an embodiment of the present disclosure.

FIG. 8 is a diagram illustrating a process by which a base station performs communication according to one embodiment of the present disclosure.

FIG. 9 is a diagram illustrating a procedure for scheduling downlink channels for each slot according to one embodiment of the present disclosure.

FIG. 10 illustrates a block diagram of a wireless communication device according to one embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power

- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

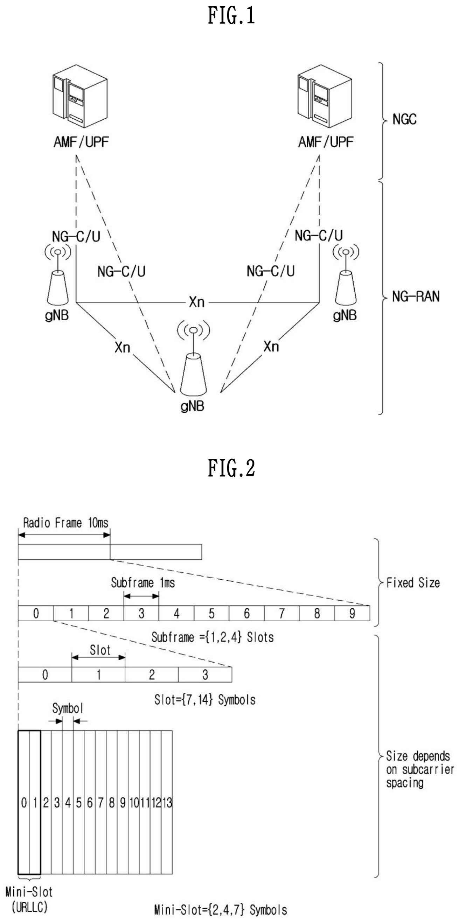

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, μ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=$2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety or 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c=10ms$. Here, a radio frame is configured with 10 subframes having a duration of $T_{sf}=(\Delta f_{max} N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

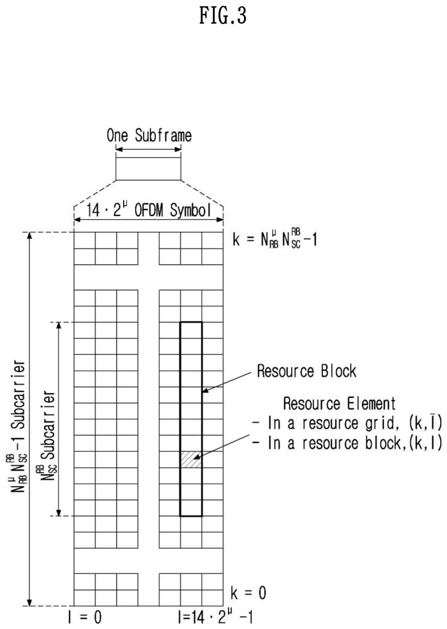

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used.

Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

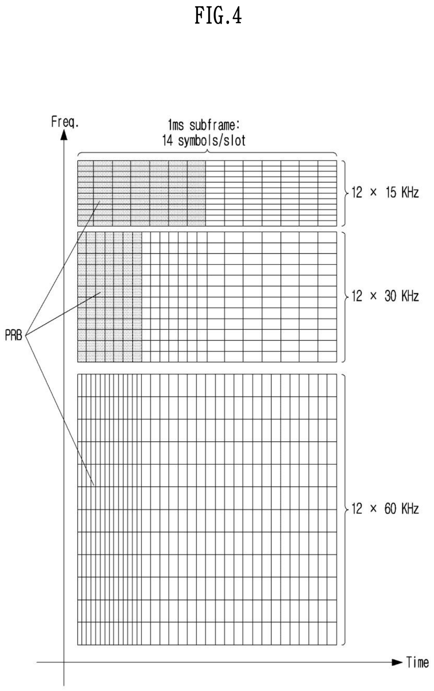

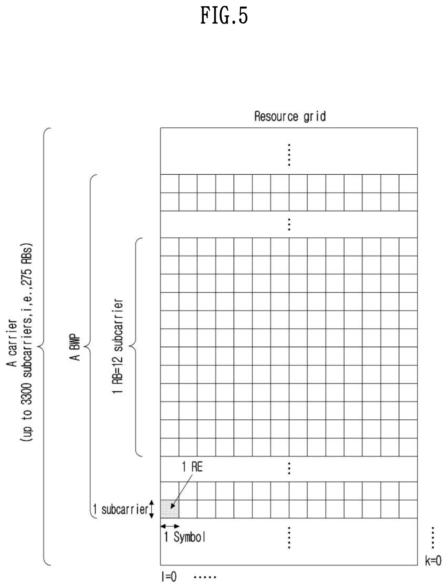

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

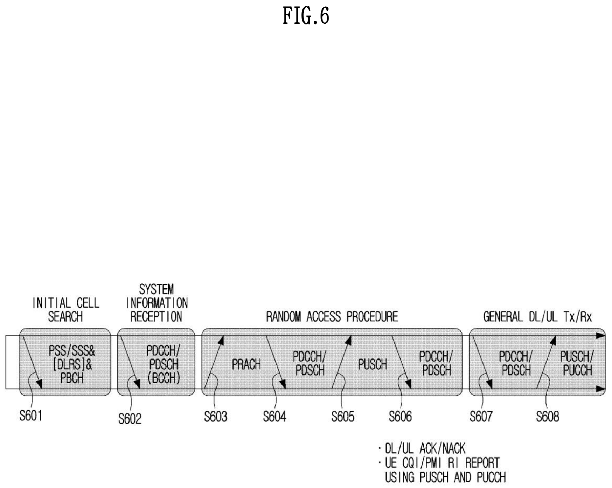

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

<u>Downlink transmission and reception method of (e)RedCap UE</u>

As described above, services that consider eMBB, URLLC, and the massive Internet of Things (mIoT) are being provided on wireless communication systems (e.g., NR, etc.). For example, hybrid services that consider eMBB, URLLC, and mIoT may be provided on wireless communication systems. Here, mIoT requires optimization of power consumption rather than high performance (e.g., high transmission speed, etc.) such as carrier aggregation.

With the recent widespread use of smart factories and/or wearable devices, the need for new UE types that take low power and URLLC into account is increasing. Accordingly, reduced capability (RedCap) UEs (i.e., R17 RedCap UEs) were introduced in 3GPP NR Release 17. RedCap UEs can perform communications using frequency resources on a narrow spectrum or narrow bandwidth. For example, RedCap UEs can reduce power consumption and cost by utilizing up to 20 MHz or 5 MHz of bandwidth instead of the existing 100 MHz bandwidth.

After that, eRedCap UEs were introduced in 3GPP NR Release 18. eRedCap UEs are similar to RedCap UEs in that they operate in a 20 MHz bandwidth. However, in the case of eRedCap UEs, unicast PDSCH and/or PUSCH (i.e., C-RNTI-based PDSCH and/or PUSCH) can be allocated within a bandwidth of up to 5 MHz. That is, a PRB of a unicast PUSCH/PDSCH corresponding to a bandwidth of up to 5 MHz can be allocated to an eRedCap UE. In this case, the unicast PUSCH/PDSCH can be indicated/allocated to the eRedCap UE through the FDRA (frequency domain resource assignment) field of the DCI, etc.

Additionally, for eRedCap UEs, various RNTI-based channels related to paging, system information block (SIB), RACH, etc. can be allocated within a 20 MHz bandwidth. That is, PRBs of various RNTI-based channels corresponding to a maximum bandwidth of 20 MHz can be allocated to eRedCap UEs (same as RedCap UEs).

Additionally, a PRB of a unicast PDSCH corresponding to a bandwidth of up to 5 MHz per single slot may be allocated to an eRedCap terminal. Previously, there was a problem in that the operation method of an eRedCap terminal was not clearly defined/configured when multiple unicast PDSCHs were scheduled on the same slot.

Hereinafter, the operation of an eRedCap UE when multiple unicast and/or multicast PDSCHs are scheduled for a single slot will be specifically described. In addition, in describing the present disclosure, "multicast PxSCH" may be replaced with "MBS PxSCH."

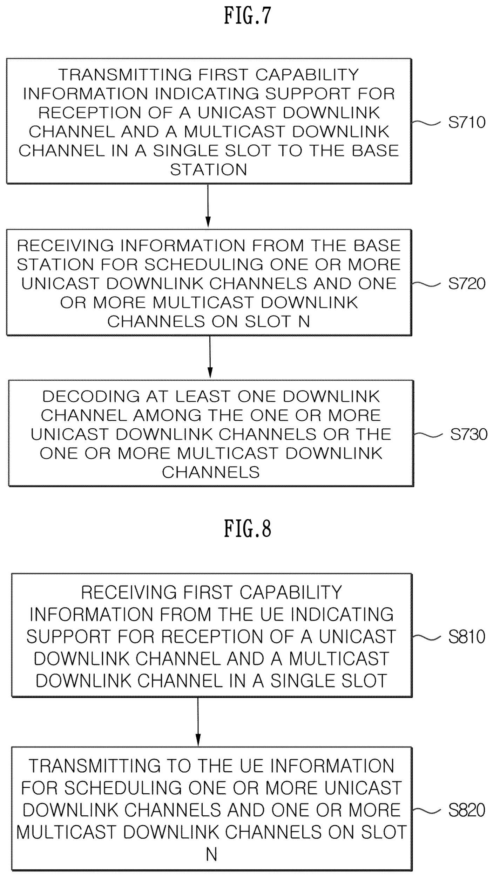

FIG. 7 is a diagram for explaining a process in which a terminal performs communication according to an embodiment of the present disclosure. The UEs of FIG. 7 and FIG. 8 may include enhanced reduced capability (eRedCap) UEs that support scheduling of unicast channels within a 5 MHz bandwidth. However, this is merely an embodiment, and the UEs of FIG. 7 and FIG. 8 may include eRedCap UEs or RedCap UEs that support scheduling of unicast channels within a 20 MHz bandwidth. As another example, the UEs of FIG. 7 and FIG. 8 may be non-RedCap terminals.

The UE may transmit first capability information indicating support for reception of a unicast downlink channel and a multicast downlink channel in a single slot to the base station (S710).

That is, the UE may transmit first capability information (e.g., "intraSlotTDM-UnicastGroupCommonPDSCH-r17") to the base station, indicating that the UE may receive a unicast channel and a multicast channel within a single slot.

Additionally or alternatively, the UE may transmit to the base station second capability information related to the number of downlink channels that the UE may process within a single slot (e.g., the total number of unicast downlink channels and/or multicast downlink channels). Additionally or alternatively, the UE may transmit to the base station information related to the UE processing capability. However, this is only one embodiment, and the UE may transmit to the base station various types of capability information described in the embodiments described below.

The UE may receive information from the base station for scheduling one or more unicast downlink channels and one or more multicast downlink channels on slot n (where n is a natural number) (S720). That is, the UE may receive information (e.g., downlink control information, etc.) for scheduling one or more unicast downlink channels and one or more multicast downlink channels on a single slot from the base station.

Based on the sum of the physical resource blocks (RBs) allocated to each of one or more unicast downlink channels and one or more multicast downlink channels exceeding a threshold, the UE may decode at least one downlink channel among the one or more unicast downlink channels or the one or more multicast downlink channels (S730).

Here, another downlink channel may be scheduled in slot n+1 adjacent to slot n, but is not limited thereto.

Specifically, the UE may determine whether the total number of PRBs of each of one or more unicast downlink channels and one or more multicast downlink channels scheduled in slot n exceeds a threshold value based on information received according to step S720.

Here, the threshold value may be determined based on the number of RBs of the downlink channel that can be allocated to a 5 MHz bandwidth or the second capability information.

For example, assume that the threshold is the number of RBs of a downlink channel that can be allocated to a 5 MHz bandwidth. Based on the subcarrier spacing (SCS) being set to 15 kHz, the number of RBs of a downlink channel that can be allocated to a 5 MHz bandwidth may be 25, and based on the SCS being set to 30 kHz, the number of RBs of a downlink channel that can be allocated to a 5 MHz bandwidth may be 12.

As another example, assume that the threshold is determined based on the second capability information. In this case, the threshold may be determined/defined as a value less than or equal to the number of downlink channels that the UE can process in a single slot.

The UE may decode/process PRBs (i.e., PRBs of at least one downlink channel) within a threshold range among PRBs of one or more unicast downlink channels or each of the one or more multicast downlink channels. Here, the sum of RBs of each of the at least one downlink channels on which the UE performs decoding may be less than or equal to the threshold. In addition, the UE may drop channels other than at least one downlink channel (i.e., the downlink channel on which decoding is performed) among the at least one unicast downlink channel and the at least one multicast downlink channel.

For example, the UE may determine the decoding order according to the order of the starting OFDM (orthogonal frequency division multiplexing) symbol of the at least one downlink channel. For example, among one or more unicast downlink channels and one or more multicast downlink channels, the downlink channel having the earliest starting OFDM symbol (i.e., the smallest starting OFDM symbol index) may be preferentially decoded.

That is, based on the sum of RBs allocated to each of one or more unicast downlink channels and one or more multicast downlink channels exceeding a threshold, the UE may perform a decoding operation in the order of downlink channels scheduled first in the time domain among the downlink channels scheduled in slot n.

Additionally or alternatively, the UE may determine the decoding order of each of the at least one downlink channel based on the size of the number of RBs of the at least one downlink channel. That is, based on whether the total sum of RBs allocated to each of the at least one unicast downlink channel and the at least one multicast downlink channel exceeds a threshold, the UE may perform a decoding operation in the order of downlink channels with a larger number of RBs among the downlink channels scheduled in slot n.

Additionally or alternatively, the UE may determine a downlink channel to be dropped based on the order of the start OFDM symbol of each of the one or more unicast downlink channels and the one or more multicast downlink channels. That is, the UE may drop the downlink channel(s) in the order scheduled later in the time domain among the one or more unicast downlink channels and the one or more multicast downlink channels.

As another example, the UE may drop a downlink channel for which feedback transmission is not configured among one or more unicast downlink channels and one or more multicast downlink channels. That is, the UE may drop a downlink channel for which feedback transmission is not configured among the downlink channels scheduled in slot n.

For example, based on no other downlink channel being scheduled in slot n+1 adjacent to slot n, the UE may decode both one or more unicast downlink channels and one or more multicast downlink channels.

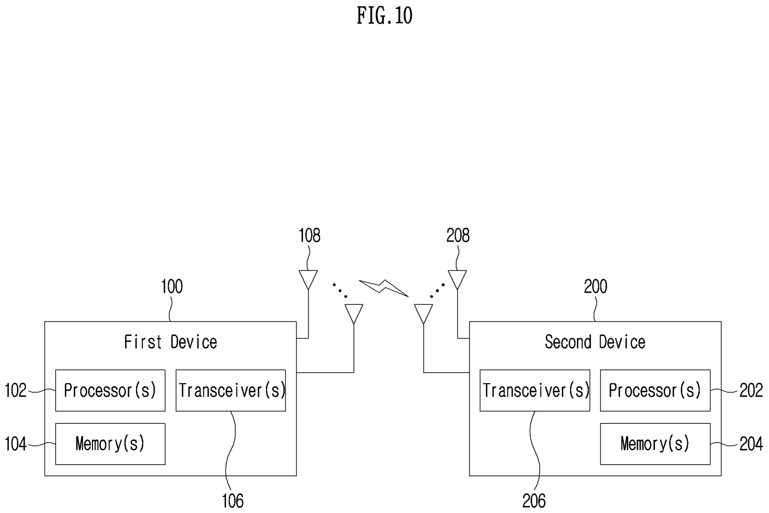

The method described in the example of FIG. 7 can be performed by the first device (100) of FIG. 10. That is, the first terminal of FIG. 10 can be implemented as the first device (100). For example, one or more processors (102) of the first device (100) of FIG. 10 can transmit first capability information indicating support for reception of a unicast downlink channel and a multicast downlink channel in a single slot to the base station through one or more transceivers (106). The one or more processors (102) may receive information for scheduling one or more unicast downlink channels and one or more multicast downlink channels on slot n (where n is a natural number) from the base station through one or more transceivers (106). Based on the sum of RBs allocated to each of one or more unicast downlink channels and one or more multicast downlink channels exceeding a threshold, one or more processors (102) may decode at least one downlink channel among the one or more unicast downlink channels or the one or more multicast downlink channels.

Furthermore, one or more memories (104) of the first device (100) may store commands for performing the method described in the example of FIG. 10 or the examples described below when executed by one or more processors (102).

FIG. 8 is a drawing for describing a process in which a base station performs communication according to one embodiment of the present disclosure.

The base station may receive first capability information from the UE indicating support for reception of a unicast downlink channel and a multicast downlink channel in a single slot (S810).

The base station may confirm that the UE supports unicast/multicast reception in a single slot through the first capability information received from the UE.

The base station may transmit to the UE information for scheduling one or more unicast downlink channels and one or more multicast downlink channels on slot n (where n is a natural number) (S820). That is, the base station may confirm that the UE supports reception of unicast/multicast downlink on a single slot through the first capability information, and transmit to the base station scheduling information for scheduling one or more unicast downlink channels and one or more multicast downlink channels on slot n.

If the sum of the PRBs of each of one or more unicast downlink channels and one or more multicast downlink channels scheduled by the base station exceeds a threshold, at least one downlink channel among the one or more unicast downlink channels and the one or more multicast downlink channels can be decoded according to the method described in step S730.

The method described in the example of FIG. 8 can be performed by the second device (200) of FIG. 10. That is, the base station of FIG. 10 can be implemented as the second device (200). For example, one or more processors (202) of the second device (200) of FIG. 10 can receive first capability information indicating support of reception of a unicast downlink channel and a multicast downlink channel in a single slot from a UE through one or more transceivers (206). The one or more processors (202) can transmit information for scheduling one or more unicast downlink channels and one or more multicast downlink channels on slot n (where n is a natural number) to the UE through one or more transceivers (206).

Furthermore, one or more memories (204) of the second device (200) may store commands for performing the method described in the example of FIG. 8 or the examples described below when executed by one or more processors (202).

Furthermore, one or more memories (204) of the second device (200) may store commands for performing the method described in the example of FIG. 8 or the examples described below when executed by one or more processors

11

(202).

For RedCap UEs (i.e., RedCap UEs introduced in 3GPP Release 17), unicast channels can be scheduled on a bandwidth of up to 20 MHz, and the maximum data rate (date rate) can be 500 Mbps. For eRedCap UEs (i.e., RedCap UEs introduced in 3GPP Release 18), unicast channels can be scheduled on a bandwidth of up to 20 MHz or 5 MHz, and the maximum data rate (date rate) can be 10 Mbps.

As an example of the present disclosure, an eRedCap UE may process data (e.g., PRB) corresponding to a bandwidth of up to 5 MHz within a unit slot. If a channel exceeding a bandwidth of 5 MHz is scheduled/allocated, the eRedCap UE may require additional processing time margin. In the case of a unicast channel, scheduling may be performed for each slot, and thus, a PRB (e.g., 25 PRBs when the SCS is 15 kHz or 12 PRBs when the SCS is 30 kHz) corresponding to the maximum bandwidth (e.g., 5 MHz) may be allocated to the eRedCap UE. If multiple unicast/multicast PDSCHs are scheduled within a single slot, the operation method of the eRedCap UE needs to be defined/configured/indicated.

Meanwhile, the eRedCap UE may report to the base station as capability information the maximum number of unicast PDSCHs (i.e., PDSCHs transmitting one or more TBs) supported per slot. For example, the eRedCap UE may transmit to the base station UE capability information (e.g., "pdsch-ProcessingType1-DifferentTB-PerSlot") that defines/indicates whether the UE, capable of processing time capability 1, supports reception of up to 2, 4, or 7 unicast PDSCHs for multiple transport blocks with scrambled PDSCHs using C-RNTI, TC-RNTI, MCS-C-RNTI, or CS-RNTI in one serving cell within the same slot per CC (component carrier) multiplexed only in the time domain. For example, an eRedCap UE may report to the base station as UE capability information that it supports 2, 4, or 7 unicast PDSCHs per SCS (e.g., per SCS 15/30/60/120 kHz).

The above-described method may also be applied to CBG (code block group) or processing type 2. For example, an eRedCap UE may transmit UE capability information (e.g., "pdsch-ProcessingType2") to a base station, indicating whether it supports PDSCH processing capability 2. The UE capability information may indicate whether the terminal supports PDSCH processing capability 2. The UE may support this only if all serving cells are self-scheduled and all serving cells in the same band configured in the network for processing type 2 use the same subcarrier spacing. The UE capability information can include the following parameters for each subcarrier spacing supported by the UE.

- If "fallback" = 'sc', the UE supports capability 2 processing time for the lowest cell index among the carriers set in the band for which the value is reported, and if fallback = 'cap1-only', the UE may support only capability 1 in the band for which the value is reported.
- "DifferentTB-PerSlot" may indicate whether the UE supports processing type 2 for 1, 2, 4 and/or 7 unicast PDSCH for different transport blocks per slot per CC. If so, the UE may indicate the number of CA serving cells that support that number of unicast PDSCH for different TBs. If "pdsch-ProcessingType2" is indicated, the UE may include at least one of information about the number of carriers for 1, 2, 4 or 7 transport blocks per slot in that field (i.e., "number-OfCarriers").

For example, assume that the UE transmits UE capability information to the base station indicating that the UE can process up to 7 unicast PDSCHs within a single slot. Here, the base station may assume that the UE may process PRBs corresponding to a bandwidth of up to 5 MHz per unicast PDSCH, and transmit PDCCH(s) for scheduling at least one unicast PDSCH to the terminal. Accordingly, the UE may process up to 25 PRBs (e.g., when the SCS is 15 kHz) or up to 12 PRBs (e.g., when the SCS is 30 kHz) per unit slot. Hereinafter, an operation of an eRedCap UE when multiple unicasts are allocated to a unit slot will be described.

In describing the present disclosure, an eRedCap UE supporting a unicast PDSCH scheduled on a bandwidth of up to 5 MHz is referred to as feature-1, and an eRedCap UE supporting a unicast PDSCH scheduled on a bandwidth of up to 20 MHz is referred to as feature-2. In addition, the operations of various embodiments of the present disclosure can be equally applied to PUSCH transmission and reception. That is, "PDSCH" in various embodiments of the present disclosure can be replaced with "PUSCH."

Embodiment 1

Embodiment 1 relates to a method for limiting a plurality of PxSCHs (x is U or D) in the case of a specific feature of an eRedCap UE. For example, in the case of feature-1, the number of PxSCHs that can be processed in one slot may be limited, or transmission of terminal capability information (e.g., capability information related to UE processing type 1/2, etc.) may be limited.

Embodiment 1-1

In one embodiment of the present disclosure, for feature 1, the use of UE capability parameters related to terminal processing type 1 may be restricted. For example, feature 1 may be restricted to use only one unicast PDSCH in a single slot. As another example, feature 1 may be restricted to use only 2, 4, or 7 or fewer PDSCHs in a single slot.

Embodiment 1-2

In one embodiment of the present disclosure, for feature 2, the use of UE capability parameters related to terminal processing type 1 may be restricted. For example, feature 2 may be restricted to use only one unicast PDSCH in a single slot. As another example, feature 2 may be restricted to use only 2, 4, or 7 or fewer PDSCHs in a single slot.

Embodiment 1-3

In one embodiment of the present disclosure, for feature-1, use of capability information related to UE processing types 1 and 2 for CBG may be restricted. Here, the capability information related to UE processing types 1 and 2 for CBG may include i) information indicating whether a UE capable of processing time capabilities 1 or/and 2 supports CBG-based reception using at most 1, at most 2, at most 4, or at most 7 unicast PDSCHs per slot per CC, and ii) information indicating whether a UE capable of processing time capabilities 1 or/and 2 supports CBG-based reception using at most 1, at most 2, at most 4, or at most 7 unicast PUSCHs per slot per CC.
For example, the use of CBG of feature-1 may be restricted. As another example, feature-1/2 may be restricted to use only PDSCH/PUSCH with a number of 2, 4, or 7 or less in one slot.

Embodiment 1-4

In another embodiment of the present disclosure, RRC parameters related to each of Embodiments 1-1, 1-2, and 1-3 may be defined, and the number of PDSCHs/PUSCHs that a UE can process in a single slot may be set/indicated/defined/reported through the RRC parameters. In addition, the above-described examples may also be applied to CBG. In this case, the UE capability parameters defined in Embodiments 1-1, 1-2, and 1-3 may not be used.
For example, an RRC parameter may be defined that sets the number of PDSCHs/PUSCHs that a UE may process in a single slot. For example, a candidate for the number of PDSCHs/PUSCHs that a UE can process in a single slot may be transmitted to the UE through the RRC parameter, and the UE may select and report one of the candidates for the corresponding number of PDSCHs/PUSCHs. In another example, multiple candidates for the number of PDSCHs/PUSCHs may be defined, and the UE may select and report one of the candidates for the corresponding number of PDSCHs/PUSCHs.
For example, if an RRC parameter that sets the number of PDSCHs/PUSCHs that a terminal can process in a single slot is not newly defined, the UE may use the terminal capability parameters defined in Embodiments 1-1, 1-2, and 1-3.
As another example, if multiple parameters that set the number of PDSCHs/PUSCHs that a UE may process in a single slot are reported simultaneously, the base station may identify the value indicated by the newly defined parameters as the number of PDSCHs/PUSCHs that a UE may process in a single slot.

Embodiment 2

Embodiment 2 relates to a method for limiting the number of PRBs of multiple unicast PxSCHs (x is U or D) allocated on a single slot to be within a specific number, in the case of a specific feature of an eRedCap UE. That is, Embodiment 2 can be applied to feature-1 or/and feature-2.
Embodiment 1 relates to a method for reducing the number of unicast PxSCHs that a UE may process per slot in a situation where PRBs of unicast PxSCHs can be allocated up to X (e.g., 25 when SCS is 15 kHz or 12 when SCS is 30 kHz). However, Embodiment 2 relates to a method for a UE to process PRBs of unicast(s) of N or less in a case where the number of PRBs of unicast PxSCHs that a UE may process within a single slot is N or less.
For example, (in the case of specific-1) the maximum number of PRBs of a single unicast PxSCH that can be allocated within a single slot can be 25 (if the SCS is 15 kHz) or 12 (if the SCS is 30 kHz). Here, when two or more unicast channels are allocated/scheduled, the UE may only process up to N PRBs within a single slot. Therefore, the base station may schedule so that the total sum of PRBs of multiple unicast PxSCHs within a unit slot is N or less.
For example, if a specific number or more of PRBs (i.e., PRBs of multiple unicast PDSCHs) are scheduled/allocated within a single slot, the UE may decode the PRBs of the unicast PDSCH in the order in which they are scheduled/received. Here, the number of PRBs of the unicast PDSCH that the UE decodes may be N or less (or a specific number or less).

Embodiment 2-1

In one embodiment of the present disclosure, N may be set/defined/indicated differently depending on the SCS. As another example, the value of N may be predefined. The value of N may be set/defined/indicated to a value less than the number of PRBs corresponding to the BWP (i.e., the maximum number of PRBs that can be set/allocated to the BWP).

Additionally or alternatively, the UE may transmit the N value supported by the terminal to the base station through UE capability information. The base station may schedule multiple PDSCHs based on the UE capability information, and the number of PRBs of the multiple PDSCHs allocated within a unit slot may be N or less.

Embodiment 2-2

In one embodiment of the present disclosure, when the value of N is not separately set/defined/indicated, the number of PRBs of a single unicast PxSCH that a UE may process within a single slot may be defined as 25 (e.g., SCS is 15 kHz) or 12 (e.g., SCS is 30 kHz).

Embodiment 2-3

As an example of the present disclosure, the number of PRBs that a UE may process within a single slot may be set/defined/indicated based on the number of multiple unicast PxSCHs. In this case, the number of PRBs that the UE may process within a single slot may be set as a multiple of a specific value (i.e., the M value). For example, the number of PRBs that the terminal can process within a single slot may be set/defined/indicated as "M * the maximum number of unicast PxSCHs that the UE supports within a single slot."

Here, the number of FDM-based multiple PDSCHs that can be supported within a single slot can be newly defined. The M value can be configured/indicated by upper layer signaling (e.g., RRC, MAC CE, etc.) or can be predefined.

For example, assume that the M value is 10 and the maximum number of supportable unicast PDSCHs reported by the terminal as UE capability information (i.e., information on the maximum number of PDSCHs that the UE may support per unit slot) is 4. In this case, the maximum number of PRBs of multiple PDSCHs that the UE may process within a single slot may be 40. If more than 40 PRBs are allocated/scheduled within a single slot, the terminal may set/process HARQ feedback of all PDSCHs to DTX (Discontinuous Transmission) or NACK (negative acknowledgment).

Embodiment 2-4

As an example of the present disclosure, the number of PRBs that a UE may process within a single slot can be dynamically set/defined/indicated depending on the number of multiple unicast PxSCHs. In this case, the number of PRBs that the UE may process within a single slot can be set to a multiple of a specific value (i.e., the M value). For example, the number of PRBs that the UE may process within a single slot can be set/defined/indicated as "M * the number of PxSCHs scheduled for the corresponding slot."

Here, the number of FDM-based multiple PDSCHs that can be supported within a single slot can be newly defined. The M value may be configured/indicated by upper layer signaling (e.g., RRC, MAC CE, etc.) or can be predefined.

For example, assume that the M value is 10 and the maximum number of currently scheduled unicast PDSCHs (within a single/specific slot) is 4. In this case, the maximum number of PRBs of multiple PDSCHs that the UE may process within a single slot may be 40. That is, the UE may process PRBs of multiple unicast PDSCHs within 40 PRBs. If more than 40 PRBs are allocated/scheduled within a single slot, the UE may set/process HARQ feedback of all PDSCHs to DTX (Discontinuous Transmission) or NACK (negative acknowledgment).

Embodiment 2-5

Embodiment 2-5 relates to a case where multiple PxSCHs scheduled/allocated within a single slot include unicast PxSCHs and multicast (or, multicast broadcast service (MBS) or/and group-common) PxSCHs (e.g., x is U or D). That is, Embodiment 2-5 relates to a case where unicast PxSCHs and multicast PxSCHs are scheduled/allocated within the same slot.

The UE may transmit/report terminal capability information to the base station, indicating whether it supports unicast PxSCH and multicast PxSCH within the same slot. For example, the UE capability information (e.g., "intra-SlotTDM-UnicastGroupCommonPDSCH-r17") transmitted/reported by the terminal to the base station may indicate whether the UE supports intra-slot TDM unicast PDSCH and group common PDSCH.

If there is more than one broadcast/multicast/unicast PDSCH in each slot, the value of the UE capability information may indicate whether a minimum time separation (e.g., 4 OFDM symbols for 30 kHz, 7 OFDM symbols for 60 kHz) is required between the start times of any two broadcast/multicast/unicast PDSCHs within the duration of the slots for any two consecutive slots n and n+1.

For example, the UE capability information may indicate i) support of TDM between one unicast PDSCH and one group common PDSCH in a slot, ii) support of TDM between M (M>1) TDMed unicast PDSCHs and one group common PDSCH in a slot per CC, iii) support of TDM between N (N>1) group common PDSCHs in a slot per CC, iv) support of TDM between K (K>1) TDMed unicast PDSCHs and L (L>1) TDMed group common PDSCHs in a slot per CC, etc. In addition, the UE maximum number of TDMed PDSCH reception capabilities in a slot per CC may be maintained based on UE capability information (e.g., "pdsch-ProcessingType1-DifferentTB-PerSlot") that defines/indicates whether the UE supports reception of up to 2, 4, or 7 unicast PDSCHs for multiple transport blocks with PDSCHs. Additionally, one slot can support at most one broadcast PDSCH.

As an example of the present disclosure, a UE may be restricted to process a PRB only when the sum of the number of PRBs of each of a multicast PDSCH and a unicast PDSCH that can be processed within one slot is less than or equal to a specific value. In this case, the specific value may be set/defined as the number of PRBs corresponding to a 5 MHz bandwidth (i.e., 25 (e.g., SCS is 15 kHz) or 12 (e.g., SCS is 30 kHz)), but is not limited thereto. In addition, the multicast PDSCH may be limited to a PDSCH on which HARQ-based ACK/NACK feedback is transmitted.

As an example of the present disclosure, it is assumed that an eRedCap UE may simultaneously process TDM-enabled multicast PDSCHs and unicast PDSCHs within a single slot. For example, the eRedCap UE may transmit capability information indicating that it can simultaneously process TDM-enabled multicast PDSCHs and unicast PDSCHs within a single slot to a base station. Here, if the total number of PRBs of TDM-enabled MBS PDSCHs and unicast PDSCHs within a single slot is less than or equal to a specific value, the eRedCap UE may process the corresponding PDSCHs.

Here, the specific value may be separately set or predefined by the base station through higher layer signaling. As another example, if the specific value is not predefined, the specific value may be defined as the number of PRBs corresponding to a 5 MHz bandwidth.

Here, the feedback mode for the multicast PDSCH can be set to ACK/NACK mode or NACK-only mode. Here, the NACK-only mode can be a general term for a mode in which the UE transmits NACK information as feedback when the multicast PDSCH is not received, and does not transmit feedback when the multicast PDSCH is received.

For example, multicast PDSCH and/or unicast PDSCH may be limited to be scheduled within one slot by a number of PRBs corresponding to 5 MHz or less. In addition, if the total number of PRBs allocated to unicast PDSCH and multicast PDSCH scheduled within one slot exceeds a specific value, the eRedCap UE may transmit ACK/NACK or DTX for the corresponding PDSCHs.

Embodiment 3

Embodiment 3 relates to a method for limiting the sum of PRBs of multiple unicast PxSCHs (x is U or D) on overlapping OFDM symbols to be within a specific value for a specific feature of an eRedCap UE.

Embodiment 2 relates to a method for limiting the number of PRBs allocated to PxSCHs scheduled within one slot. Embodiment 3 relates to a method for limiting the allocation of PRBs lower than a specific K value within one slot (i.e., PRBs lower than a specific K value among PRBs allocated to the plurality of PxSCHs) when multiple FDM-enabled PxSCHs within one slot overlap in the time domain (i.e., overlap on one or more OFDM symbols). Additionally or alternatively, when multiple FDM-enabled PxSCHs within one slot overlap in the time domain, an eRedCap UE may process PRBs lower than a specific K value among PRBs allocated to multiple PxSCHs scheduled within one slot.

Embodiment 3-1

In one embodiment of the present disclosure, the K value may be configured/defined/indicated differently depending on the SCS. As another example, the K value may be predefined. The K value may be configured/defined/indicated to a value less than the number of PRBs corresponding to the BWP (i.e., the maximum number of PRBs that can be configured/allocated to the BWP).

Additionally or alternatively, the UE may transmit the K value supported by the terminal to the base station through terminal capability information. The base station may schedule multiple PDSCHs (e.g., PDSCHs overlapped and FDMed in the time domain) based on the UE capability information, and the number of PRBs of the multiple PDSCHs allocated within a unit slot may be K or less.

Embodiment 3-2

In one embodiment of the present disclosure, when the K value is not separately configured/defined/indicated, the number of PRBs of a single unicast PxSCH that a UE may process within a single slot may be defined as 25 (e.g., SCS is 15 kHz) or 12 (e.g., SCS is 30 kHz).

Embodiment 3-3

As an example of the present disclosure, the number of PRBs that a UE can process within a single slot may be set/defined/indicated based on the number of multiple unicast PxSCHs. In this case, the number of PRBs that the UE may process within a single slot may be set as a multiple of a specific value (i.e., an L value). For example, the number of PRBs that the UE may process within a single slot may be configured/defined/indicated as "L * the maximum number of unicast PxSCHs that the terminal supports within a single slot."

Here, the number of FDM-based multiple PDSCHs that can be supported within a single slot can be newly defined. The L value can be configured/indicated by upper layer signaling (e.g., RRC, MAC CE, etc.) or can be predefined.

For example, assume that the L value is 10 and the maximum number of supportable unicast PDSCHs reported by the UE in the UE capability information (i.e., information on the maximum number of PDSCHs that the UE may support per unit slot) is 4. In this case, the maximum number of PRBs of multiple PDSCHs that the UE may process within a single slot may be 40. If more than 40 PRBs are allocated/scheduled within a single slot, the terminal may set/process the HARQ feedback of all PDSCHs to DTX or NACK.

Embodiment 3-4

As an example of the present disclosure, the number of PRBs that a UE may process within a single slot can be dynamically set/defined/indicated depending on the number of multiple unicast PxSCHs. In this case, the number of PRBs that the UE can process within a single slot can be set to a multiple of a specific value (i.e., the L value). For example, the number of PRBs that the UE can process within a single slot can be set/defined/indicated as "L * the number of PxSCHs scheduled for the corresponding slot."

Here, the number of FDM-based multiple PDSCHs that can be supported within a single slot can be newly defined. The L value may be configured/indicated by upper layer signaling (e.g., RRC, MAC CE, etc.) or can be predefined.

For example, assume that the L value is 10 and the maximum number of currently scheduled unicast PDSCHs (within a single/specific slot) is 4. In this case, the maximum number of PRBs of multiple PDSCHs that the UE may process within a single slot may be 40. That is, the UE may process PRBs of multiple unicast PDSCHs within 40 PRBs. If more than 40 PRBs are allocated/scheduled within a single slot, the UE may set/process HARQ feedback of all PDSCHs to DTX or NACK.

Embodiment 4

Embodiment 4 relates to various ways of handling unicast/multicast PxSCH (x is D or U) scheduled in a single slot.

Embodiment 4-1

The method applied to multiple unicast PxSCHs scheduled/allocated to a single slot described in embodiments 1, 2 and 3 can be applied to i) cases where multiple multicast PxSCHs are scheduled to a single slot and ii) cases where multiple multicasts and PxSCHs are applied to a single slot. If the feedback mode related to the multicast PxSCH is a HARQ-based ACK/NACK mode or a Nack-only mode, the method described above can be applied to the multicast PxSCH.

For example, assume that a UE may process up to 7 PDSCHs in a specific slot and that 4 unicast PDSCHs and 3 multicast PDSCHs are scheduled in the specific slot. In this case, the UE may decode a total of 7 multicast/unicast PDSCHs scheduled within the specific slot.

As another example of the present disclosure, in the case of an eRedCap UE, only one unicast PDSCH may be allocated to one slot. That is, the base station may transmit information to the eRedCap UE to schedule only one unicast PDSCH on one slot, and the unicast PDSCH may be in an FDM or TDM relationship with another PDSCH (e.g., a multicast/broadcast PDSCH).

Embodiment 4-2

For eRedCap UEs that support only unicast PDSCHs on a 5 MHz bandwidth, only one unicast PDSCH can be supported within a slot. In this case, a multicast PDSCH may also be restricted from being allocated to a slot in which a unicast PDSCH is scheduled. In addition, the feedback mode of the PDSCH may be an ACK/NACK mode or a NACK-only mode.

Here, the operation applied to unicast PDSCH and multicast PDSCH may also be applied to broadcast PDSCH, MSG (message) 2 (e.g., random access response corresponding to PRACH preamble) or MSG B (e.g., response message to MSG A) transmitted and received in a random access procedure.

Embodiment 4-3

The method applied to multiple unicast PxSCHs scheduled/allocated to a single slot described in embodiments 1, 2 and 3 can also be applied to PRACH transmission and reception operations. For example, the unicast or/and multicast PxSCHs in embodiments 1, 2 and 3 can be replaced with PDSCHs or PUSCHs related to a random access procedure. That is, the number of PDSCHs or PUSCHs related to a random access procedure scheduled to a single slot can be limited so as not to exceed a certain number.

Embodiment 5

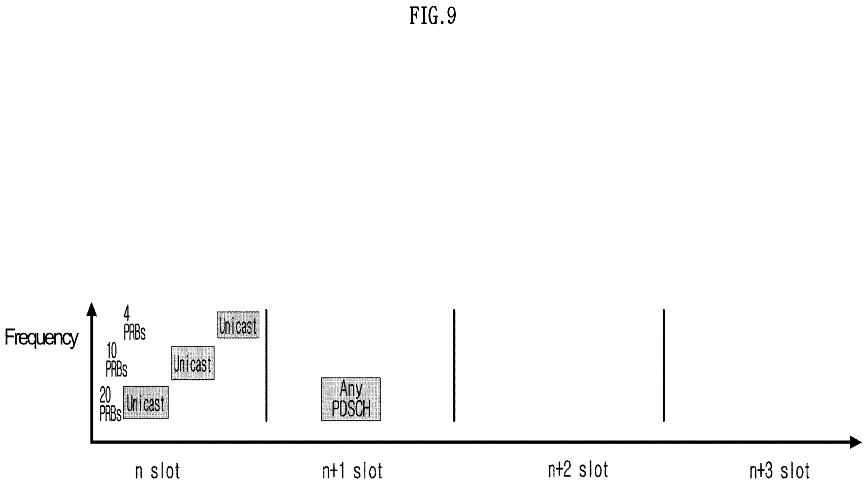

Embodiment 5 relates to a processing method when multiple unicast PDSCHs are scheduled within one slot.
The eRedCap UE may process PRBs corresponding to a 5 MHz bandwidth in a single slot, and the number of PRBs corresponding to a 5 MHz bandwidth can be 25 (e.g., SCS is 15 kHz) or 12 (e.g., SCS is 30 kHz).
If the number of PRBs allocated to a single slot exceeds the number of PRBs corresponding to a 5 MHz bandwidth, additional processing time may be required for the single slot. For example, as illustrated in FIG. 9, if another PDSCH is scheduled on slot n+1, only PRBs corresponding to a 5 MHz bandwidth among the total PRBs may be processed in slot n. Hereinafter, a method for an eRedCap UE to process or drop a unicast PDSCH in slot n will be described when the number of PRBs of multiple PDSCHs allocated to a single slot exceeds the number of PRBs corresponding to a 5 MHz bandwidth.

Embodiment 5-1

In one embodiment of the present disclosure, the eRedCap UE may drop the unicast PDSCH with the lowest time domain (i.e., OFDM symbol basis) among the plurality of unicast PDSCHs allocated to slot n. That is, the eRedCap UE may process the PDSCH with the fastest time domain (i.e., OFDM symbol basis) and process the unicast PDSCH within a range that does not exceed the number of PRBs corresponding to a 5 MHz bandwidth.
Additionally, it is assumed that multiple unicast PDSCHs (having a TDM relationship) are scheduled consecutively. As described above, the eRedCap UE may process the earliest PDSCH in the time domain (i.e., based on the OFDM symbol). Here, if the sum of the PRBs of the unicast PDSCH previously processed by the eRedCap UE and the PRBs corresponding to a specific unicast PDSCH (i.e., a unicast PDSCH to be processed by the eRedCap UE in RHE) exceeds the number of PRBs corresponding to a 5 MHz bandwidth, the eRedCap UE may drop the specific PDSCH. In addition, if the sum of the PRBs of the unicast PDSCH previously processed by the eRedCap UE and the PRBs corresponding to the PDSCH following the dropped PDSCH exceeds the number of PRBs corresponding to a 5 MHz bandwidth, the eRedCap UE may process the PDSCH following the dropped PDSCH.
That is, the eRedCap UE may process unicast PDSCHs in the order of OFDM symbol start. In addition, if the sum of the PRBs of the processed unicast PDSCHs and the PRBs of a specific PDSCH that is fastest in the time domain among the unicast PDSCHs to be processed exceeds the number of PRBs corresponding to a 5 MHz bandwidth, the eRedCap UE may drop the specific PDSCH.

Embodiment 5-2

In one embodiment of the present disclosure, when the number of PRBs of multiple PDSCHs allocated to a single slot (e.g., slot n) exceeds the number of PRBs corresponding to a 5 MHz bandwidth, the eRedCap UE may drop unicast PDSCHs without HARQ feedback among the multiple PDSCHs. That is, the eRedCap UE may preferentially process PDSCHs with HARQ feedback configured.

Embodiment 5-3

In one embodiment of the present disclosure, when the number of PRBs of multiple PDSCHs allocated to a single slot (e.g., slot n) exceeds the number of PRBs corresponding to a 5 MHz bandwidth, the eRedCap UE may process a unicast PDSCH with a smaller number of PRBs among the multiple PDSCHs or a unicast PDSCH with a larger number of PRBs among the multiple PDSCHs. That is, the eRedCap UE may identify a PDSCH to be processed with priority among the multiple PDSCHs based on the number of PRBs, and may process at least one PDSCH within the range of the number of PRBs corresponding to a 5 MHz bandwidth.
For example, if there are PDSCHs among multiple PDSCHs having the same number of PRBs, the eRedCap UE may first process a fast unicast PDSCH among the PDSCHs based on the time domain (i.e., based on the OFDM symbol).

Embodiment 5-4

In one embodiment of the present disclosure, when the number of PRBs of multiple PDSCHs allocated to a single slot (e.g., slot n) exceeds the number of PRBs corresponding to a 5 MHz bandwidth, the eRedCap UE may not decode all of the corresponding PDSCHs or may drop them.

As another example, the UE may not expect PRBs to be allocated/scheduled in excess of the number of PRBs corresponding to a 5 MHz bandwidth on a single slot. That is, the base station may identify that the eRedCap UE can process PRBs corresponding to a 5 MHz bandwidth on a single slot based on terminal capability information transmitted by the UE or based on predefined terminal capabilities. Accordingly, the base station may not allocate PRBs in excess of the number of PRBs corresponding to a 5 MHz bandwidth on a single slot (e.g., slot n). Embodiment 5-4 may be applied regardless of whether another PDSCH is allocated to slot n+1. As another example, Embodiment 5-4 may be applied when another PDSCH is allocated to slot n+1.

Embodiment 5-5

In one embodiment of the present disclosure, if the number of PRBs of multiple PDSCHs allocated to slot n exceeds the number of PRBs corresponding to a 5 MHz bandwidth, and no PDSCH is scheduled/allocated in slot n+1, the eRedCap UE can process all of the multiple PDSCHs. For example, the eRedCap UE can process multiple PDSCHs across slot n and slot n+1, but is not limited thereto.

Embodiments 5-1, 5-2, 5-3, 5-4, and 5-5 can be applied regardless of whether PDSCH is scheduled/allocated in slot n+1. However, this is only an embodiment, and Embodiments 5-1, 5-2, 5-3, 5-4, and 5-5 can be applied only when PDSCH is scheduled/allocated in slot n+1.

And, in Embodiments 5-1, 5-2, 5-3, 5-4 and 5-5, "unicast PDSCH" may be replaced with "multicast PDSCH" or/and "broadcast PDSCH".

In addition, the eRedCap UE may transmit a NACK for unicast PDSCH(s) requesting HARQ feedback among the PDSCH(s) dropped in Embodiments 5-1, 5-2, 5-3, 5-4, and 5-5 (i.e., PDSCHs that were not decoded) to the base station.

The above-described embodiments 1, 2, 3, 4, and 5 and the detailed embodiments of the corresponding embodiments may be executed/performed independently, but are not limited thereto. The embodiments 1, 2, 3, 4, and 5 and the detailed embodiments of the corresponding embodiments may also be executed/performed in combination with each other.

Through the various embodiments described above, when multiple PDSCHs are scheduled on one slot, the eRedCap UE can efficiently perform decoding for at least one PDSCH within the capability range.

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   transmitting, to a base station, first capability information indicating support for reception of a unicast downlink channel and a multicast downlink channel in a single slot;
   receiving, from the base station, information scheduling at least one unicast downlink channel and at least one multicast downlink channel on slot n (where n is a natural number); and
   based on a sum of physical resource blocks (RBs) allocated to each of the at least one unicast downlink channel and the at least one multicast downlink channel exceeding a threshold, decoding at least one downlink channel among the at least one unicast downlink channel or the at least one multicast downlink channel.

2. The method of claim 1, wherein:
   the threshold is determined based on second capability information related to a number of RBs of downlink channels that can be allocated to a 5 MHz bandwidth or a number of downlink channels that the UE can process in a single slot.

3. The method of claim 2, wherein:

   based on a subcarrier spacing (SCS) being set to 15 kHz, the number of RBs of the downlink channels that can be allocated to the 5 MHz bandwidth is 25, and
   based on the SCS being set to 30 kHz, the number of RBs of the downlink channels that can be allocated to the 5 MHz bandwidth is 12.

4. The method of claim 1, wherein:
   a decoding order of each of the at least one downlink channel is determined according to an order of a starting orthogonal frequency division multiplexing (OFDM) symbol of the at least one downlink channel.

5. The method of claim 1, wherein:
   a downlink channel to be dropped is determined according to an order of a start OFDM symbol of each of the at least one unicast channel and the at least one multicast channel.

6. The method of claim 1, wherein:
   a decoding order of each of the at least one downlink channel is determined according to a size of a number of RBs of the at least one downlink channel.

7. The method of claim 1, wherein:
   among the at least one unicast downlink channel and the at least one multicast downlink channel, a downlink channel for which feedback transmission is not configured is dropped by the UE.

8. The method of claim 1, wherein:

   the sum of the RBs of each of the at least one downlink channel is less than or equal to the threshold, and
   a remaining channels, excluding the at least one downlink channel among the at least one unicast downlink channel and the at least one multicast downlink channel, are dropped by the UE.

9. The method of claim 1, wherein:
   another downlink channel is scheduled in slot n+1 adjacent to the slot n.

10. The method of claim 1, wherein:
    based on no other downlink channel being scheduled in slot n+1 adjacent to slot n, both the at least one unicast downlink channel and the at least one multicast downlink channel are decoded by the UE.

11. The method of claim 1, wherein:
    the UE is an enhanced reduced capability (eRedCap) UE that supports scheduling of unicast channels within a 5 MHz bandwidth.

12. The method of claim 1, wherein:
    the downlink channel includes a physical downlink shared channel (PDSCH).

**13.** A user equipment (UE) in a wireless communication system, the UE comprising:

at least one transceiver; and
at least one processor coupled to the at least one transceiver;
wherein the at least one processor is configured to:

transmit, to a base station through the at least one transceiver, first capability information indicating support for reception of a unicast downlink channel and a multicast downlink channel in a single slot;
receive, from the base station through the at least one transceiver, information scheduling at least one unicast downlink channel and at least one multicast downlink channel on slot n (where n is a natural number); and
based on a sum of physical resource blocks (RBs) allocated to each of the at least one unicast downlink channel and the at least one multicast downlink channel exceeding a threshold, decode at least one downlink channel among the at least one unicast downlink channel or the at least one multicast downlink channel.

**14.** A method performed by a base station in a wireless communication system, the method comprising:

receiving, from a user equipment (UE), first capability information indicating support for reception of a unicast downlink channel and a multicast downlink channel in a single slot; and
transmitting, to the UE, information for scheduling at least one unicast downlink channel and at least one multicast downlink channel in slot n (where n is a natural number);
wherein based on a sum of physical resource blocks (RBs) allocated to each of the at least one unicast downlink channel and the at least one multicast downlink channel exceeding a threshold, at least one downlink channel among the at least one unicast downlink channel or the at least one multicast downlink channel is decoded by the UE.

**15.** A base station in a wireless communication system, the base station comprising:

at least one transceiver; and
at least one processor coupled to the at least one transceiver;
wherein the at least one processor is configured to:

receive, from a user equipment (UE) through the at least one transceiver, first capability information indicating support for reception of a unicast downlink channel and a multicast downlink channel in a single slot; and
transmit, to the UE through the at least one transceiver, information for scheduling at least one unicast downlink channel and at least one multicast downlink channel in slot n (where n is a natural number);
wherein based on a sum of physical resource blocks (RBs) allocated to each of the at least one unicast downlink channel and the at least one multicast downlink channel exceeding a threshold, at least one downlink channel among the at least one unicast downlink channel or the at least one multicast downlink channel is decoded by the UE.

**16.** A processing device configured to control a user equipment (UE) in a wireless communication system, the processing device comprising:

at least one processor; and
at least one computer memory operatively coupled to the at least one processor and storing instructions for performing operations upon being executed by the at least one processor,
wherein the operations comprise:

transmitting, to a base station, first capability information indicating support for reception of a unicast downlink channel and a multicast downlink channel in a single slot;
receiving, from the base station, information scheduling at least one unicast downlink channel and at least one multicast downlink channel on slot n (where n is a natural number); and
based on a sum of physical resource blocks (RBs) allocated to each of the at least one unicast downlink channel and the at least one multicast downlink channel exceeding a threshold, decoding at least one downlink channel among the at least one unicast downlink channel or the at least one multicast downlink channel.

**17.** At least one non-transitory computer readable medium storing at least one instruction, wherein:

the at least one instruction executed by at least one processor controls a device in a wireless communication system to perform:

transmitting, to a base station, first capability information indicating support for reception of a unicast downlink channel and a multicast downlink channel in a single slot;

receiving, from the base station, information scheduling at least one unicast downlink channel and at least one multicast downlink channel on slot n (where n is a natural number); and

based on a sum of physical resource blocks (RBs) allocated to each of the at least one unicast downlink channel and the at least one multicast downlink channel exceeding a threshold, decoding at least one downlink channel among the at least one unicast downlink channel or the at least one multicast downlink channel.

FIG.1

FIG.2

# FIG.3

FIG.4

FIG.5

FIG.6

INITIAL CELL SEARCH — PSS/SSS& [DLRS]& PBCH — S601

SYSTEM INFORMATION RECEPTION — PDCCH/PDSCH (BCCH) — S602

RANDOM ACCESS PROCEDURE — PRACH — S603 / PDCCH/PDSCH — S604 / PUSCH — S605 / PDCCH/PDSCH — S606

GENERAL DL/UL Tx/Rx — PDCCH/PDSCH — S607 / PUSCH/PUCCH — S608

· DL/UL ACK/NACK
· UE CQI/PMI RI REPORT
  USING PUSCH AND PUCCH

## FIG.7

TRANSMITTING FIRST CAPABILITY INFORMATION INDICATING SUPPORT FOR RECEPTION OF A UNICAST DOWNLINK CHANNEL AND A MULTICAST DOWNLINK CHANNEL IN A SINGLE SLOT TO THE BASE STATION — S710

RECEIVING INFORMATION FROM THE BASE STATION FOR SCHEDULING ONE OR MORE UNICAST DOWNLINK CHANNELS AND ONE OR MORE MULTICAST DOWNLINK CHANNELS ON SLOT N — S720

DECODING AT LEAST ONE DOWNLINK CHANNEL AMONG THE ONE OR MORE UNICAST DOWNLINK CHANNELS OR THE ONE OR MORE MULTICAST DOWNLINK CHANNELS — S730

## FIG.8

RECEIVING FIRST CAPABILITY INFORMATION FROM THE UE INDICATING SUPPORT FOR RECEPTION OF A UNICAST DOWNLINK CHANNEL AND A MULTICAST DOWNLINK CHANNEL IN A SINGLE SLOT — S810

TRANSMITTING TO THE UE INFORMATION FOR SCHEDULING ONE OR MORE UNICAST DOWNLINK CHANNELS AND ONE OR MORE MULTICAST DOWNLINK CHANNELS ON SLOT N — S820

EP 4 712 643 A1

FIG.9

Frequency

4
PRBs

Unicast

10
PRBs

Unicast

20
PRBs

Unicast

Any
PDSCH

n slot          n+1 slot          n+2 slot          n+3 slot

# FIG.10

EP 4 712 643 A1

# EP 4 712 643 A1

## INTERNATIONAL SEARCH REPORT

| | International application No. |
|---|---|
| | **PCT/KR2024/005881** |

| A. | CLASSIFICATION OF SUBJECT MATTER |
|---|---|

**H04W 72/1273**(2023.01)i; **H04W 8/24**(2009.01)i; **H04W 72/0446**(2023.01)i; **H04W 72/53**(2023.01)i; **H04L 5/00**(2006.01)i; **H04L 27/26**(2006.01)i; **H04W 88/02**(2009.01)i; **H04W 72/30**(2023.01)i; **H04L 65/612**(2022.01)i

According to International Patent Classification (IPC) or to both national classification and IPC

| B. | FIELDS SEARCHED |
|---|---|

Minimum documentation searched (classification system followed by classification symbols)

H04W 72/1273(2023.01); H04L 1/18(2006.01); H04L 5/00(2006.01); H04W 72/04(2009.01); H04W 72/10(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: unicast PDSCH, multicast PDSCH, capability report, RB, sum, threshold, SCS, starting OFDM symbol, decoding order, drop, feedback, eRedCap

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | VIVO. Discussion on further UE complexity reduction. R1-2300464, 3GPP TSG RAN WG1 #112. Athens, Greece. 17 February 2023. <br> See sections 1-2.2. | 1-17 |
| Y | US 2023-0083445 A1 (SAMSUNG ELECTRONICS CO., LTD.) 16 March 2023 (2023-03-16) <br> See paragraphs [0076], [0082] and [0119]. | 1-17 |
| Y | MODERATOR (NTT DOCOMO, INC.). Summary#1 on UE features for NR MBS. R1-2301800, 3GPP TSG RAN WG1 #112. Athens, Greece. 28 February 2023. <br> See sections 2.2 and 2.6. | 7,9-10 |
| A | US 2022-0322313 A1 (SAMSUNG ELECTRONICS CO., LTD.) 06 October 2022 (2022-10-06) <br> See paragraphs [0171]-[0333]. | 1-17 |
| A | WO 2022-148184 A1 (DATANG MOBILE COMMUNICATIONS EQUIPMENT CO., LTD.) 14 July 2022 (2022-07-14) <br> See claims 1-25. | 1-17 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/005881**

| Patent document cited in search report | | | Publication date (day/month/year) | Patent family member(s) | | | Publication date (day/month/year) |
|---|---|---|---|---|---|---|---|
| US | 2023-0083445 | A1 | 16 March 2023 | CN | 115776356 | A | 10 March 2023 |
| | | | | EP | 4145752 | A1 | 08 March 2023 |
| | | | | EP | 4145752 | B1 | 27 March 2024 |
| | | | | KR | 10-2023-0036536 | A | 14 March 2023 |
| | | | | TW | 202312771 | A | 16 March 2023 |
| US | 2022-0322313 | A1 | 06 October 2022 | CN | 115150941 | A | 04 October 2022 |
| | | | | EP | 4298848 | A1 | 03 January 2024 |
| | | | | KR | 10-2023-0164024 | A | 01 December 2023 |
| | | | | US | 2024-0023123 | A1 | 18 January 2024 |
| | | | | WO | 2022-211480 | A1 | 06 October 2022 |
| WO | 2022-148184 | A1 | 14 July 2022 | CN | 114760705 | A | 15 July 2022 |
| | | | | EP | 4277405 | A1 | 15 November 2023 |

Form PCT/ISA/210 (patent family annex) (July 2022)